# EUROPÄISCHE PATENTSCHRIFT

(11) **EP 3 446 898 B1**
(45) Veröffentlichungstag und Bekanntmachung des Hinweises auf die Patenterteilung: **09.12.2020**
(21) Anmeldenummer: 18175057.1
(22) Anmeldetag: 30.05.2018
(51) Int. Cl.: B60H 1/00, B60K 35/00, B60K 37/06

(54) **VERFAHREN UND VORRICHTUNG ZUR BEDIENUNG EINES MEHRKANAL-GERÄTES SOWIE KRAFTFAHRZEUG UND COMPUTERPROGRAMM**
METHOD AND DEVICE FOR OPERATING A MULTICHANNEL DEVICE, MOTOR VEHICLE AND COMPUTER PROGRAM
PROCÉDÉ ET DISPOSITIF DE COMMANDE D'UN APPAREIL MULTICANAL AINSI QUE VÉHICULE AUTOMOBILE ET PROGRAMME INFORMATIQUE

(30) Priorität: 23.08.2017 DE 102017214735
(43) Veröffentlichungstag der Anmeldung: 27.02.2019
(73) Patentinhaber: VOLKSWAGEN AKTIENGESELLSCHAFT, 38440 Wolfsburg (DE)
(72) Erfinder: Hengstenberg, Oliver, 15748 Märkisch Buchholz (DE); Baumgarten, Jens, 10115 Berlin (DE); Michaelis, Jörn, 10785 Berlin (DE)

(56) Entgegenhaltungen:
- EP-A1- 2 164 252
- DE-A1-102014 003 947
- JP-A- 2005 136 704
- KR-A- 20160 105 590
- US-A1- 2008 231 615
- US-A1- 2016 347 151

## Beschreibung

Die Erfindung betrifft das technische Gebiet von sogenannten User Interfaces. Dabei geht es um ein Verfahren und eine Vorrichtung zur Bedienung eines Mehrzonen-Klimagerätes. Die Erfindung betrifft weiterhin ein Fahrzeug, das eine Vorrichtung gemäß der Erfindung aufweist.

Für die Bedienung von einem Mehrzonen-Klimagerät, welches im Fahrzeug installiert ist, ist häufig eine Bedienungseinheit vorgesehen, mit mehreren Bedienelementen. Dazu gehören zwei oder mehr Temperaturversteller für die Anwahl der Wunschtemperatur in den jeweiligen Zonen. Oft sind auch noch verschiedene Bedienelemente vorgesehen, mit denen der Luftstrom der Lüftung eingestellt werden kann. Ist eine Klimaautomatik vorgesehen, wird auch eine Sync-Taste verbaut, die dafür vorgesehen ist, für eine gleichzeitige Verstellung der Temperaturversteller bei dem Mehrzonen-Klimagerät zu sorgen. Für den Temperaturausgleich zwischen den verschiedenen Zonen sorgt dann die Klimaregelung unter Berücksichtigung der eingestellten Werte bei den Temperaturverstellern. Diese Funktion ist ein Komfortmerkmal und macht es überflüssig, die verschiedenen Temperaturversteller getrennt zu bedienen, um den Temperaturausgleich herzustellen. Wenn die Synchronisations-Betriebsart eingeschaltet ist, dient üblicherweise der dem Fahrer zugeordnete Temperaturversteller dazu, die Temperatur anzuwählen, die für die Temperaturregelung in allen Zonen maßgeblich ist. Wenn die Synchronisations-Betriebsart abgeschaltet ist, werden die verschiedenen Temperaturzonen voneinander entkoppelt, und jede Zone wird individuell auf den durch den jeweiligen zugeordneten Temperaturversteller angewählten Temperaturwert geregelt.

Aus der DE 10 2004 056 813 A1 ist eine Mehrzonen-Klimaanlage zur Klimatisierung eines Kraftfahrzeuginnenraums bekannt. Die Klimaanlage enthält ein Hauptklimamodul, einen ersten und einen zweiten Wärmetauscher und ein Mehrzonenmodul. Die Besonderheit besteht in der Anordnung von Hauptklimamodul, Mehrzonenmodul und zweitem Wärmetauscher.

Aus der EP 1 486 362 A2 ist eine weitere Mehrzonen-Klimaanlage zur Klimatisierung eines Kraftfahrzeuginnenraums bekannt. Dabei ist das Besondere, dass für jede einzelne Klimazone eine individuelle, klimazonenspezifische Luftdüsenanordnung bestehend aus mindestens einer Luftdüse vorgesehen ist.

Aus der US 2008/231615 A1 ist es bekannt eine De-Svnchronisation (Umschaltung DUAL) des vorher im SYNC-Modus betriebenen Mehrzonen-Klimagerätes durch Verstellung des zweiten Verstellers erreicht. Die Synchronisation wird aber durch Knopfdruck wiederhergestellt mit Hilfe eines Bedienknopfes, dessen Funktion "PUSH DUAL OFF" eingeblendet wird, wenn der Fahrer den Versteller betätigt. Der Fahrer muss explizit einen Knopf drücken, um die Temperaturzonen wieder zu synchronisieren. Es muss also ein weiterer Bedienknopf dafür vorgesehen werden.

Aus dem Dokument JP 2005 136704 A ist ein Mehrkanal-TV-Gerät mit einem ersten Tuner und einem zweiten Tuner bekannt, um das gleichzeitige Anzeigen zweier Programme auf einem Bildschirm nach Art von PIP oder POP-Darstellungen zu ermöglichen.

Aus verschiedenen Gründen kann es erforderlich werden, die Bedieneinheit umzugestalten. Dazu zählen Design-Gründe, Platzmangel, Wunsch nach größerer Übersichtlichkeit sowie der Wunsch nach einem anderen Design-Konzept, bei dem ein Eindruck eines intelligenten (mitdenkenden) Systems mehr im Vordergrund steht.

Aufgabe der Erfindung ist es daher, ein anderes Bedienkonzept für die Aktivierung/Deaktivierung der Synchronisations-Betriebsart für ein Mehrzonen-Klimagerät zu gestalten. Gleichzeitig soll das neue Bedienkonzept eine möglichst flüssige Interaktion zulassen und sich nahtlos in den Bedienvorgang einfügen.

Diese Aufgabe wird durch ein Verfahren zur Bedienung eines Mehrzonen-Klimagerätes gemäß Anspruch 1, eine Vorrichtung zur Bedienung eines Mehrzonen-Klimagerät gemäß Anspruch 7 und ein Fahrzeug gemäß Anspruch 9 gelöst.

Die abhängigen Ansprüche beinhalten vorteilhafte Weiterbildungen und Verbesserungen der Erfindung entsprechend der nachfolgenden Beschreibung dieser Maßnahmen.

Das erfindungsgemäße Verfahren zur Bedienung eines Mehrzonen-Klimagerätes hat folgende Voraussetzungen: Das Mehrzonen-Klimagerät weist wenigstens einen ersten Temperaturversteller für wenigstens eine erste Zone auf und wenigstens einen zweiten Temperaturversteller für wenigstens eine zweite Zone. Es gibt wenigstens zwei verschiedene Betriebsmodi, wobei in einem ersten Betriebsmodus die wenigstens zwei verschiedenen Zonen zusammen geregelt werden, wobei in diesem Modus der erste Temperaturversteller als Hauptversteller dient und dessen Temperaturversteller für die Regelung des Temperatur in den wenigstens zwei Zonen herangezogen wird. In dem zweiten Betriebsmodus werden die wenigstens zwei verschiedenen Zonen getrennt geregelt, darin wirken die beiden Temperaturversteller individuell.

Das erfindungsgemäße Verfahren besteht darin, dass nach Betätigung des zweiten Temperaturverstellers in dem ersten Betriebsmodus der erste Betriebsmodus verlassen wird und in dem zweiten Betriebsmodus die wenigstens zwei verschiedenen Zonen getrennt geregelt werden. Weiterhin besteht das Verfahren darin, dass bei weiterer Betätigung des zweiten Temperaturverstellers der Art, dass die angewählte Temperatur in Übereinstimmung gebracht wird mit dem Temperaturwert, der durch den ersten Temperaturversteller angewählt ist, der zweite Betriebsmodus verlassen wird und die wenigstens zwei verschiedenen Zonen in dem ersten Betriebsmodus wieder zusammen geregelt werden.

Durch dieses Verfahren kann die in der Bedienungseinheit vorgesehene Spezialtaste für die Ein-/Ausschaltung der Synchronisations-Betriebsart eingespart werden. Dies hat auch den Vorteil, dass der Platz für die "Sync-Taste" anderweitig genutzt werden kann, ohne auf die Sync-Funktion verzichten zu müssen, und sei es nur zu Designzwecken. Der so gestaltete Bedienungsvorgang fügt sich intuitiv und automatisch in die übliche Art der Bedienung der Klimaanlage ein. Ein weiterer Vorteil ist, dass dadurch die Bedienung der Klimaanlage einem intelligenten System gleicht, das sich gegenüber dem Benutzer wie ein mitdenkendes/vorausschauendes System präsentiert.

Eine weitere vorteilhafte Maßnahme besteht darin, dass in dem zweiten Betriebsmodus bei weiterer Betätigung des ersten Temperaturverstellers der Art, dass die eingestellte Temperatur in Übereinstimmung gebracht wird mit der Temperatur, die durch den zweiten Temperaturversteller eingestellt ist, eine fortwährende getrennte Temperaturregelung für die wenigstens zwei verschiedenen Zonen durchgeführt wird, wobei die Temperaturwahl des ersten Temperaturverstellers für die Regelung der Temperatur in der ersten Zone herangezogen wird und die Temperaturwahl des zweiten Temperaturverstellers für die Regelung der Temperatur in der zweiten Zone herangezogen wird. Hier wird also nicht gleich wieder auf die Synchronisationsbetriebsart umgeschaltet und es werden häufige Wechsel in der Betriebsart vermieden.

Eine andere vorteilhafte Maßnahme besteht darin, dass der Synchronisations-Betriebsmodus als voreingestellte Standardfunktion nach Starten des Betriebes des Mehrzonen-Klimagerätes durchgeführt wird.

Um diesen Komfort schnell zu realisieren, ist es vorteilhaft, wenn das Starten des Betriebes des Mehrzonen-Klimagerätes durch Einschaltung der Stromversorgung, durch Starten des Motors des Fahrzeuges oder durch Starten der Route für eine Navigationsfunktion erfolgt.

Für eine erfindungsgemäße Vorrichtung zur Bedienung eines Mehrzonen-Klimagerätes ist es erforderlich, wenn die Vorrichtung zur Durchführung des erfindungsgemäßen Verfahrens eingerichtet ist, wobei die Vorrichtung wenigstens zwei Temperaturversteller und wenigstens eine Anzeigeeinheit für die Darstellung der eingestellten Temperaturwerte aufweist.

In weiterer vorteilhafter Weise kann die Vorrichtung als Teil eines Infotainment-Systems für ein Fahrzeug ausgebildet sein.

Ausführungsbeispiele der Erfindung sind in den Zeichnungen dargestellt und werden nachfolgend anhand der Figuren näher erläutert.

Es zeigen:
- Fig. 1: ein Cockpit eines Fahrzeuges mit einem Infotainment-System;
- Fig. 2: die Bedieneinheit für ein Mehrzonen-Klimagerät;
- Fig. 3: ein Blockschaltbild eines Infotainment-Systems; und
- Fig. 4: den Ablauf des Verfahrens zur Bedienung des Mehrzonen-Klimagerätes.

Die vorliegende Beschreibung veranschaulicht die Prinzipien der Erfindung. Es versteht sich somit, dass Fachleute in der Lage sein werden, verschiedene Anordnungen zu konzipieren.

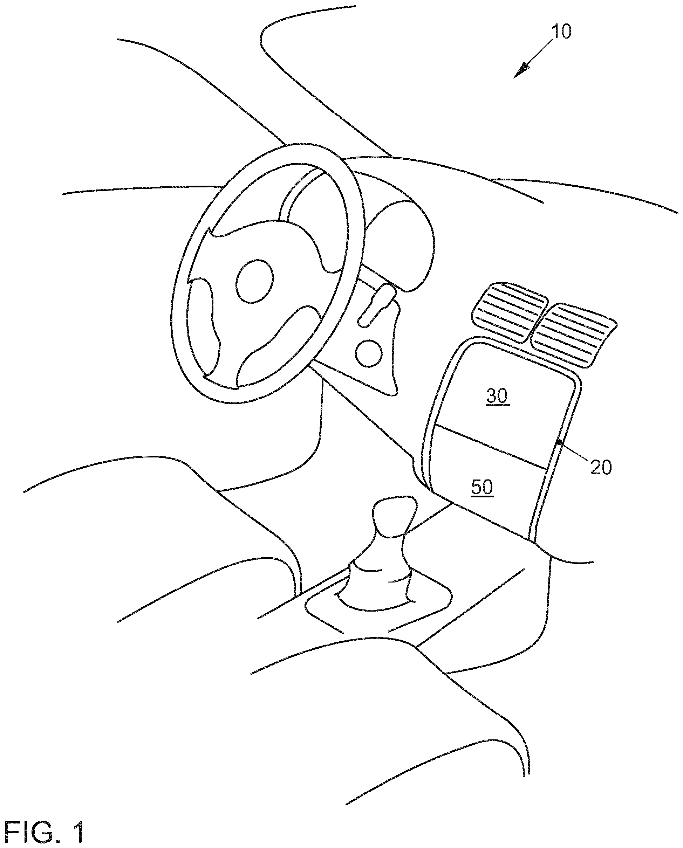

Fig. 1 zeigt das Cockpit eines Fahrzeuges. Dargestellt ist ein Personenkraftwagen Pkw. Als Fahrzeug kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Motorräder, Schienenfahrzeuge, usw. Die Erfindung wäre allgemein bei Landfahrzeugen, Schienenfahrzeugen und Luftfahrzeugen einsetzbar.

In Fig. 1 ist ein Cockpit eines Fahrzeugs 10 dargestellt, welches mit einer Vorrichtung zum Bedienen eines Infotainment-Systems 20 gemäß einem Ausführungsbeispiel der Erfindung ausgestattet ist. Mit Hilfe des Infotainment-Systems 20 können verschiedene Funktionen des Fahrzeugs 10 bedient werden. Beispielsweise können mit der Vorrichtung 20 ein Radio, ein Navigationssystem, eine Wiedergabe von gespeicherten Musikstücken, eine Klimaanlage, andere elektronische Einrichtungen oder andere Komfortfunktionen oder Applikationen des Fahrzeugs 10 gesteuert werden. Die Zusammenfassung all dieser Komponenten ist auch unter dem Begriff "Infotainment-System" bekannt. Ein Infotainment-System bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort zusammengesetzt aus den Worten Information und Entertainment (Unterhaltung). Die Vorrichtung zum Bedienen eines Infotainment-Systems 20 weist im Bereich einer Mittelkonsole des Fahrzeugs 10 eine Anzeigeeinrichtung in Form eines berührungsempfindlichen Bildschirms 30, auch als "Touchscreen" bezeichnet, auf, wobei dieser Bildschirm 30 insbesondere von einem Fahrer des Fahrzeugs 10, aber auch von einem Beifahrer des Fahrzeugs 10 gut eingesehen und bedient werden kann. Unterhalb des Bildschirms 30 ist zudem eine mechanische Bedieneinheit 50 vorgesehen, die auch die Bedienelemente für die Mehrzonen-Klimaanlage enthält. Beispielsweise befinden sich hier Tasten, Drehregler oder Kombinationen hiervon wie beispielsweise Drückdrehregler.

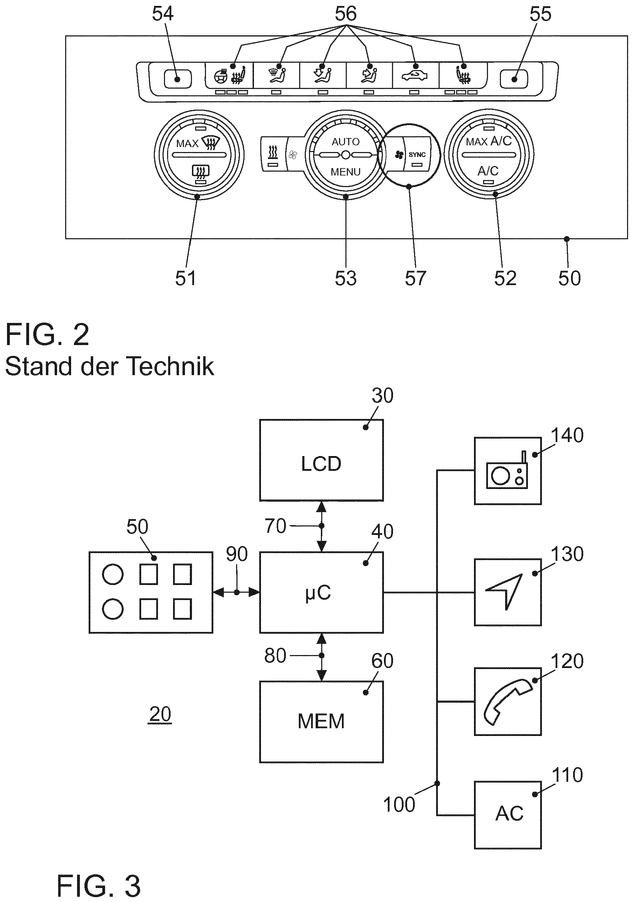

Fig. 2 zeigt eine typische Form der Bedieneinheit 50. Diese Bedieneinheit 50 dient ausschließlich zur Bedienung des Mehrzonen-Klimagerätes des Fahrzeuges 10. Dazu weist die Bedieneinheit 50 ein Hauptbedienelement 53 auf, mit dem der automatische Betrieb der Klimaanlage ein/ausgeschaltet werden kann und mit dem verschiedene Funktionen über ein oder mehrere Bildschirmmenüs bedient werden können und verschiedene Parameter-Einstellungen vorgenommen werden können. Für die Temperatureinstellung sind in der Bedieneinheit 50 zwei Temperaturversteller 51 und 52 vorgesehen. Der Temperaturversteller 51 ist der Fahrerseite zugeordnet und soll vom Fahrer bedient werden. Der Temperaturversteller 52 ist der Beifahrerseite zugeordnet und soll vom Beifahrer bedient werden. Beide Temperaturversteller sind als Drehschalter ausgebildet. Wenn eine 3 Zonen-Klimaanlage verbaut ist, ist üblicherweise ein weiterer Temperaturversteller im Fond angeordnet. Bei einer 4 Zonen-Klimaanlage können dementsprechend zwei weitere Temperaturversteller im Fond angebracht sein. Die weiteren Bedienelemente 54 bis 56 dienen zur Bedienung von Belüftungseinstellungen und Einstellungen der Sitzheizung. Das besonders hervorgehobene Bedienelement 57 betrifft die zuvor erwähnte Sync-Taste, mit der die Synchronisations-Betriebsart ein/ausgeschaltet werden kann. Genau diese Taste soll gemäß Aufgabe der Erfindung entfallen. Fig. 2 entspricht daher noch der Lösung, wie sie gemäß Stand der Technik eingesetzt wird.

Fig. 3 zeigt schematisch ein Blockschaltbild des Infotainment-Systems 20 sowie beispielhaft einige Teilsysteme oder Applikationen des Infotainment-Systems. Das Infotainment-System 20 umfasst die berührungsempfindliche Anzeigeeinheit 30, eine Recheneinrichtung 40, die Bedieneinheit 50 und einen Speicher 60. Die Anzeigeeinheit 30 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheit 30 ist über eine Datenleitung 70 mit der Recheneinrichtung 40 verbunden. Die Datenleitung kann nach dem LVDS-Standard ausgelegt sein. Über die Datenleitung 70 empfängt die Anzeigeeinheit 30 Steuerdaten zum Ansteuern der Anzeigefläche des Touchscreens 30 von der Recheneinrichtung 40. Über die Datenleitung 70 werden auch Steuerdaten der eingegebenen Befehle von dem Touchscreen 30 zu der Recheneinrichtung 40 übertragen. Die Klimaanlage wird über die Bedieneinheit 50 bedient.

Eingaben können aber auch über den berührungsempfindlichen Bildschirm 30 getätigt werden. Für die digitale Realisierung dieser Bedienungsart wird von der Recheneinrichtung 40 ein Programmmodul abgearbeitet, das den Algorithmus der berührungsempfindlichen Eingabemethode enthält. Dieses Programmmodul ist in der Speichereinrichtung 60 gespeichert und wird bei Aktivierung des entsprechenden Menüpunktes zur Eingabe eines Parameters in die Recheneinrichtung 40 geladen und kommt zur Abarbeitung. Die Realisierung mittels eines entsprechend programmierten Programmmoduls gilt auch für die anderen Betriebsmodi, bei denen die Eingabe eines anderen Parameters in entsprechender Weise geschieht.

Die Speichereinrichtung 60 ist über eine Datenleitung 80 mit der Recheneinrichtung 40 verbunden. In dem Speicher 60 ist ein Piktogramm- oder Symbolverzeichnis hinterlegt, in dem zu jedem Menüpunkt das entsprechende Piktogramm oder Symbol hinterlegt ist.

Die weiteren Teile des Infotainment-Systems Radio 140, Navigationsgerät 130, Telefon 120 und Mehrzonen-Klimaanlage 110 sind über den Datenbus 100 mit der Vorrichtung 20 zur Bedienung des Infotainment-Systems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus).

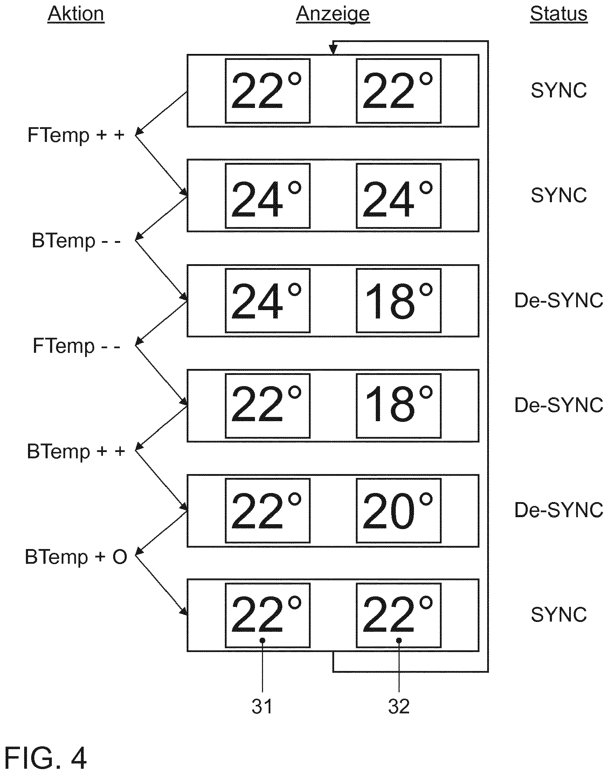

Das erfindungsgemäße Bedienungsverfahren zur Bedienung des Mehrzonen-Klimagerätes 110 wird im Folgenden anhand von einem in Fig. 4 dargestellten Ausführungsbeispiel erläutert, bei dem der Ablauf der Bedienung dargestellt ist. Die dargestellten Temperaturanzeigen werden jeweils auf der Anzeigeeinheit 30 angezeigt.

Das beschriebene Beispiel betrifft die Bedienung der Klimaanlage des Fahrzeuges. Dies geschieht ebenfalls über das Infotainment-System 20. Zur Bedienung wird der berührungsempfindliche Bildschirm 30 ausgenutzt, um bestimmte Anzeigen oder Bedienmenüs darzustellen. Dadurch ist die Bedienung sehr flexibel gestaltet und es können die verschiedenen Geräte Radio 140, Navigationsgerät 130, Telefon 120 und Klimaanlage 110 bedient werden. Dazu kann als Hauptmenü ein Auswahlmenü angezeigt werden, wo die zu bedienenden Geräte dargestellt oder aufgelistet werden. Der Fahrer wählt eines der Geräte aus und es erscheint das Hauptmenü für das ausgewählte Gerät auf dem LCD-Bildschirm 30. Ein Menü-Punkt im Hauptmenü der Klimaanlage ist die Einstellung der gewünschten Temperatur, hier getrennt nach Fahrer- und Beifahrerseite.

Der Ablauf des Bedienungsvorgangs startet in der Fig. 4 oben und verläuft von oben nach unten. Zu Beginn des Vorgangs wird die Klimaanlage in der Synchronisations-Betriebsart betrieben, s. Angabe in der Spalte "Status". Diese Betriebsart wird als Standardfunktion immer nach Einschalten der Klimaanlage automatisch gewählt. Auf der linken Seite in der Spalte "Anzeige" wird in Feld 31 die gewünschte Temperatur für die Fahrerseite angezeigt.

Auf der rechten Seite wird die gewünschte Temperatur für die Beifahrerseite in Feld 32 angezeigt. In der Spalte "Aktion" ist jetzt dargestellt, welcher Bedienvorgang durchgeführt wird. Im ersten Schritt "FTemp++" erhöht der Fahrer die Temperatur von 22° auf 24° Celsius. Dazu betätigt er den Temperaturversteller 51. In der Spalte "Anzeige" ist dargestellt, dass sich die Temperaturerhöhung nicht nur für die Fahrerseite, sondern auch für die Beifahrerseite auswirkt. Die gewünschte Temperatur wird nämlich im Sychronisationsmodus durch den Bedienungsschritt simultan auch für die Beifahrerseite auf 24° erhöht. Im nächsten Schritt "BTemp--" verringert der Beifahrer die Temperatur von 24° auf 18°, indem er den Temperaturversteller 52 betätigt. Dieser Vorgang wird von dem entsprechenden Computerprogramm, das das Einstellen der Klimaanlage unterstützt, so interpretiert, dass die Synchronisationsbetriebsart "Sync" verlassen werden soll. Stattdessen wird die Betriebsart "De-Sync" mit individueller Temperaturregelung für die verschiedenen Klimazonen eingeleitet.

Das Computerprogramm wird vorzugsweise von der Recheneinheit 40 abgearbeitet. Bei der Abarbeitung sendet es die entsprechenden Befehle zur Temperatureinstellung in den verschiedenen Zonen über den Kommunikationsbus 100 an die Mehrzonen-Klimaanlage 110. Alternativ kann das Computerprogramm in der Klimaanlage 110 selbst abgearbeitet werden. Dann wird die Recheneinheit 40 die von der Bedieneinheit 50 empfangenen Werte zur Temperatureinstellung über den Bus 100 an die Klimaanlage 110 senden.

Im dritten Schritt "FTemp--" verringert der Fahrer die Temperatureinstellung von 24° auf 22°. Das Computerprogramm wertet diese Bedienung so aus, dass weiterhin als Betriebsart die Individualregelung verwendet werden soll. Die Temperatureinstellung auf Beifahrerseite wird deshalb von diesem Bedienungsschritt nicht beeinflusst. Der Betriebsmodus "De-Sync" der Klimaanlage bleibt erhalten.

Im vierten Schritt "BTemp++" erfolgt eine Temperaturerhöhung seitens des Beifahrers von 18° auf 20°. Dadurch bleibt es bei der Individual-Temperaturregelung in Betriebsart "De-Sync".

Im letzten Schritt "BTemp+o" erfolgt eine weitere Temperaturerhöhung seitens des Beifahrers von 20° auf 22°. Weil die neu eingestellte Wunschtemperatur der Temperatureinstellung auf Fahrerseite entspricht, wird diese Temperaturverstellung von dem Computerprogramm so interpretiert, dass ab dann die Temperaturregelung in der Synchronisations-Betriebsart "Sync" fortgeführt werden soll. Die weiteren Bedienungsschritte folgen dem Schema wie in Fig. 4 von oben nach unten gezeigt.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Für die schnelle Erzielung des Komforts ist es vorteilhaft, wenn das Starten des Betriebes des Mehrzonen-Klimagerätes durch Einschaltung der Stromversorgung, durch Starten des Motors des Fahrzeuges oder durch Starten der Route für eine Navigationsfunktion in der Synchronisationsbetriebsart erfolgt. Das Navigationsgerät 130 ist Teil des Infotainmentsystems 20 und über den Kommunikationsbus 100 mit der Klimaanlage 110 verbunden. Das Starten der Route kann von dem Navigationsgerät 130 mit einer entsprechenden Botschaft über den Bus 100 zu der Klimaanlage 110 gemeldet werden.

Es sollte verstanden werden, dass das erfindungsgemäße Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das erfindungsgemäße Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Erfindung ist nicht auf die hier beschriebenen Ausführungsbeispiele beschränkt.

### Bezugszeichenliste

- 10: Fahrzeug
- 20: Infotainment-System
- 30: berührungsempfindliche Anzeigeeinheit Infotainment-System
- 31: erste Temperaturanzeige
- 32: zweite Temperaturanzeige
- 40: Mikrorechner
- 50: Eingabeeinheit
- 51: erster Temperaturversteller
- 52: zweiter Temperaturversteller
- 53-56: weitere Bedienelemente
- 57: Sync-Taste
- 60: Speichereinheit
- 70: Datenleitung zur Anzeigeeinheit
- 80: Datenleitung zur Speichereinheit
- 90: Datenleitung zur Eingabeeinheit
- 100: Datenbus
- 110: Klimaanlage
- 120: Telefon
- 130: Navigationsgerät
- 140: Radio

## Patentansprüche

1. Verfahren zur Bedienung eines Mehrzonen-Klimagerätes (110) eines Fahrzeuges (10), wobei das Mehrzonen-Klimagerät (110) wenigstens einen ersten Temperaturversteller (51) für die Temperaturregelung in wenigstens einer erste Zone aufweist und wenigstens einen zweiten Temperaturversteller (52) für die Temperaturregelung in wenigstens einer zweiten Zone aufweist, wobei in einem ersten Betriebsmodus des Mehrzonen-Klimagerätes (110) die wenigstens zwei verschiedenen Zonen zusammen geregelt werden, wobei der erste Temperaturversteller (51) als Hauptversteller dient und dessen Temperaturwahl für die Temperaturregelung in den wenigstens zwei Zonen herangezogen wird, wobei nach Betätigung des zweiten Temperaturversteller (52) der erste Betriebsmodus verlassen wird und in einem zweiten Betriebsmodus die wenigstens zwei verschiedenen Zonen getrennt geregelt werden, wobei die Parameterwahl des zweiten Temperaturverstellers (52) für die Temperaturregelung in der zweiten Zone herangezogen wird, und die Temperaturwahl des ersten Temperaturverstellers (51) für die Temperaturregelung in der ersten Zone herangezogen wird, **dadurch gekennzeichnet, dass** bei weiterer Betätigung des zweiten Temperaturverstellers (52) derart, dass die angewählte Temperatur in Übereinstimmung gebracht wird mit dem Temperaturwert, der durch den ersten Temperaturversteller (51) angewählt ist, der zweite Betriebsmodus verlassen wird und die wenigstens zwei verschiedenen Zonen in dem ersten Betriebsmodus wieder zusammen geregelt werden.

2. Verfahren nach Anspruch 1, wobei in dem zweiten Betriebsmodus bei weiterer Betätigung des ersten Temperaturverstellers (51) die Temperaturwahl des ersten Temperaturverstellers (51) nur für die Regelung der Temperatur in der ersten Zone herangezogen wird.

3. Verfahren nach Anspruch 1 oder 2, wobei in dem zweiten Betriebsmodus bei weiterer Betätigung des ersten Temperaturversteller (51) derart, dass die eingestellte Temperatur in Übereinstimmung gebracht wird mit der Temperatur, der durch den zweiten Temperaturversteller (52) eingestellt ist, eine fortwährende getrennte Temperaturregelung der zwei verschiedenen Zonen durchgeführt wird, wobei die Temperaturwahl des ersten Temperaturversteller (51) für die Regelung der Temperatur in der ersten Zone herangezogen wird und die Temperaturwahl des zweiten Temperaturverstellers (52) für die Regelung der Temperatur in der zweiten Zone herangezogen wird.

4. Verfahren nach einem der vorhergehenden Ansprüche, wobei die Zusammenregelung der wenigstens zwei Zonen einem Synchronisations-Betriebsmodus des Mehrzonen-Klimagerät (110) entspricht, bei der eine Angleichung der Temperaturregelung in den wenigstens zwei Zonen erfolgt, derart, dass die Temperaturregelung für die zweite Zone so erfolgt, dass als Sollwert der durch den ersten Temperaturversteller (51) angewählte Temperaturwert angewendet wird.

5. Verfahren nach Anspruch 4, wobei der Synchronisations-Betriebsmodus als voreingestellte Standardfunktion nach Starten des Betriebes des Mehrzonen-Klimagerätes (110) durchgeführt wird.

6. Verfahren nach einem der vorhergehenden Ansprüche , wobei das Starten des Betriebes des Mehrzonen-Klimagerätes (110) durch Einschaltung der Stromversorgung, durch Starten des Motors des Fahrzeuges (10) oder durch Starten der Route für eine Navigationsfunktion erfolgt.

7. Vorrichtung zur Bedienung eines Mehrzonen-Klimagerätes (110), **dadurch gekennzeichnet, dass** die Vorrichtung zur Durchführung des Verfahrens nach einem der vorhergehenden Ansprüche eingerichtet ist, wobei die Vorrichtung wenigstens zwei Temperaturversteller (51, 52) und wenigstens eine Anzeigeeinheit (30) für die Darstellung der eingestellten Temperaturwerte aufweist.

8. Vorrichtung nach Anspruch 7, wobei die Vorrichtung Teil eines Infotainment-Systems (20) für ein Fahrzeug (10) ist.

9. Fahrzeug, **dadurch gekennzeichnet, dass** das Fahrzeug (10) eine Vorrichtung nach Anspruch 7 oder 8 aufweist.

## Claims

1. Method for operating a multi-zone air conditioning device (110) of a vehicle (10), wherein the multi-zone air conditioning device (110) comprises at least one first temperature adjuster (51) for controlling the temperature in at least one first zone and comprises at least one second temperature adjuster (52) for controlling the temperature in at least one second zone, wherein in a first operating mode of the multi-zone air conditioning device (110) the at least two different zones are controlled in common, wherein the first temperature adjuster (51) acts as the main adjuster and the temperature selection thereof is used for the control of the temperature in the at least two zones, wherein following actuation of the second temperature adjuster (52) the first operating mode is exited and in a second operating mode the at least two different zones are controlled separately, wherein the parameter selection of the second temperature adjuster (52) is used for the control of the temperature in the second zone and the temperature selection of the first temperature adjuster (51) is used for the control of the temperature in the first zone, **characterized in that** on further actuation of the second temperature adjuster (52) such that the selected temperature is brought into agreement with the temperature value that is selected by the first temperature adjuster (51), the second operating mode is exited and the at least two different zones are again controlled in common in the first operating mode.

2. Method according to Claim 1, wherein in the second operating mode, on further actuation of the first temperature adjuster (51), the temperature selection of the first temperature adjuster (51) is only used for the control of the temperature in the first zone.

3. Method according to Claim 1 or 2, wherein in the second operating mode, on further actuation of the first temperature adjuster (51) such that the adjusted temperature is brought into agreement with the temperature that is adjusted by the second temperature adjuster (52), continuing separate temperature control of the two different zones is carried out, wherein the temperature selection of the first temperature adjuster (51) is used for the control of the temperature in the first zone and the temperature selection of the second temperature adjuster (52) is used for the control of the temperature in the second zone.

4. Method according to any one of the preceding claims, wherein the common control of the at least two zones corresponds to a synchronization operating mode of the multi-zone air conditioning device (110), in which alignment of the temperature control in the at least two zones is carried out, such that the temperature control for the second zone is carried out so that the temperature value selected by the first temperature adjuster (51) is used as the setpoint value.

5. Method according to Claim 4, wherein the synchronization operating mode is carried out as a preset standard function after starting the operation of the multi-zone air conditioning device (110).

6. Method according to any one of the preceding claims, wherein starting the operation of the multi-zone air conditioning device (110) is carried out by switching on the power supply, by starting the engine of the vehicle (10) or by starting the route for a navigation function.

7. Device for operating a multi-zone air conditioning device (110), **characterized in that** the device is arranged for carrying out the method according to any one of the preceding claims, wherein the device comprises at least two temperature adjusters(51, 52) and at least one display unit (30) for display of the adjusted temperature values.

8. Device according to Claim 7, wherein the device is part of an infotainment system (20) for a vehicle (10).

9. Vehicle, **characterized in that** the vehicle (10) has a device according to Claim 7 or 8.

## Revendications

1. Procédé de commande d'un climatiseur multizone (110) d'un véhicule (10), dans lequel le climatiseur multizone (110) comprend au moins un premier dispositif de réglage de température (51) pour la régulation de température dans au moins une première zone et au moins un second dispositif de réglage de température (52) pour la régulation de température dans au moins une seconde zone, dans lequel, dans un premier mode de fonctionnement du climatiseur multizone (110), lesdites au moins deux zones différentes sont régulées en commun, dans lequel le premier dispositif de réglage de température (51) fait office de dispositif de réglage principal et sa sélection de température est utilisée pour la régulation de température dans lesdites au moins deux zones, dans lequel le premier mode de fonctionnement est interrompu après l'actionnement du second régulateur de température (52) et, dans un second mode de fonctionnement, lesdites au moins deux zones différentes sont régulées séparément, dans lequel la sélection de paramètres du second régulateur de température (52) est utilisée pour la régulation de température dans la seconde zone, et la sélection de température du premier régulateur de température (51) est utilisée pour la régulation de température dans la première zone, **caractérisé en ce que**, lors d'un autre actionnement du second dispositif de réglage de température (52), la température sélectionnée est amenée à coïncider avec la valeur de température sélectionnée par le premier dispositif de réglage de température (51), le second mode de fonctionnement est interrompu et lesdites au moins deux zones différentes sont à nouveau régulées en commun dans le premier mode de fonctionnement.

2. Procédé selon la revendication 1, dans lequel, dans le second mode de fonctionnement, lors d'un autre actionnement du premier dispositif de réglage de température (51), la sélection de température du premier dispositif de réglage de température (51) n'est utilisée que pour la régulation de la température dans la première zone.

3. Procédé selon la revendication 1 ou 2, dans lequel, dans le second mode de fonctionnement, lors d'un autre actionnement du premier dispositif de réglage de température (51), la température réglée est amenée à coïncider avec la température réglée par le second dispositif de réglage de température (52), une régulation de température séparée et continue des deux zones différentes est effectuée, dans lequel la sélection de température du premier dispositif de réglage de température (51) est utilisée pour réguler la température dans la première zone et la sélection de température du second dispositif de réglage de température (52) est utilisée pour réguler la température dans la seconde zone.

4. Procédé selon l'une des revendications précédentes, dans lequel la régulation en commun desdites au moins deux zones correspond à un mode de fonctionnement synchronisé du climatiseur multizone (110), lors duquel l'homogénéisation de la régulation de température dans lesdites au moins deux zones est effectuée de manière à ce que la régulation de température pour la seconde zone soit effectuée de telle sorte que la valeur de température sélectionnée par le premier régulateur de température (51) soit utilisée comme valeur de consigne.

5. Procédé selon la revendication 4, dans lequel le mode de fonctionnement de synchronisation est mis en œuvre en tant que fonction standard prédéfinie après le démarrage du fonctionnement du climatiseur multizone (110) .

6. Procédé selon l'une des revendications précédentes, dans lequel le démarrage du fonctionnement du climatiseur multizone (110) est effectué par mise sous tension de l'alimentation électrique, par démarrage du moteur du véhicule (10) ou par lancement de l'itinéraire d'une fonction de navigation.

7. Dispositif de commande d'un climatiseur multizone (110), **caractérisé en ce que** le dispositif est conçu pour mettre en œuvre le procédé selon l'une des revendications précédentes, dans lequel le dispositif comporte au moins deux dispositifs de réglage de température (51, 52) et au moins une unité d'affichage (30) permettant d'afficher les valeurs de température réglées.

8. Dispositif selon la revendication 7, dans lequel le dispositif fait partie d'un système d'info-divertissement (20) pour véhicule (10).

9. Véhicule, **caractérisé en ce que** le véhicule (10) comporte un dispositif selon la revendication 7 ou 8.
